# EUROPÄISCHE PATENTSCHRIFT

(11) **EP 0 847 415 B1**
(45) Veröffentlichungstag und Bekanntmachung des Hinweises auf die Patenterteilung: **13.01.1999**
(21) Anmeldenummer: 96930989.7
(22) Anmeldetag: 30.08.1996
(51) Int. Cl.: C08G 69/16, C08G 69/46

(54) **VERFAHREN ZUR KONTINUIERLICHEN HERSTELLUNG VON POLYAMID 6 UNTER VERWENDUNG VON RÜCKLACTAM**
METHOD OF CONTINUOUSLY PRODUCING POLYAMIDE 6 USING RECYCLED LACTAM
PROCEDE DE PRODUCTION CONTINU DE POLYAMIDE 6 A L'AIDE DE LACTAME RECYCLE

(30) Priorität: 30.08.1995 DE 19531990
(43) Veröffentlichungstag der Anmeldung: 17.06.1998
(73) Patentinhaber: POLYMER ENGINEERING GmbH, 07407 Rudolstadt (DE)
(72) Erfinder: WILTZER, Karlheinz, D-07422 Bad Blankenburg (DE); LAUSMANN, Peter, D-07407 Rudolstadt (DE); EBERT, Baldur, D-07422 Bad Blankenburg (DE)
(74) Vertreter: Feldkamp, Rainer, Dipl.-Ing.
(86) Internationale Anmeldenummer: EP9603827
(87) Internationale Veröffentlichungsnummer: WO9708224

(56) Entgegenhaltungen:
- EP-A- 0 000 397
- EP-A- 0 005 466
- EP-A- 0 123 881
- DE-A- 2 501 348
- DE-A- 2 948 865
- DE-A- 4 324 616

## Beschreibung

Die Erfindung betrifft ein mehrstufiges Verfahren zur kontinuierlichen Herstellung eines Polyamid 6 unter Verwendung von Rücklactamen, das in Extraktions- und Schmelzeentmonomerisierungsstufen zur Verringerung des niedermolekularen Anteils bei Polyamid 6 anfällt.

Es ist bekannt, daß sich während der Polykondensation von ε-Caprolactam zu Polyamid 6 ein chemisches Gleichgewicht einstellt, welches temperaturabhängig ist. Bei einer betrieblich üblichen Reaktionstemperatur von 280°C stellt sich ein wasserlöslicher Anteil von ca. 13 % ein.

Für die Weiterverarbeitung des Polymeren ist es notwendig, den nicht umgesetzten Anteil herauszulösen. Hierfür sind verschiedene Verfahren bekannt. So werden z.B. aus der im Gleichgewichtszustand befindlichen Schmelze Granulate hergestellt, die mit Wasser extrahiert werden. Dabei werden ε-Caprolactam, Oligomere und Dimere herausgelöst. Bei diesem Verfahren ist eine anschließende Trocknung des Granulates und eine Aufarbeitung der wäßrigen Extraktionswässer durch Eindampfung notwendig.

Weiterhin sind Verfahren bekannt, bei denen aus Schmelzfilmen mittels Vakuum oder Inertgas nicht umgesetztes ε-Caprolactam, Dimere und Oligomere ausgetrieben werden.

Aus ökonomischen Gründen sollen diese wiedergewonnenen Produkte dem Polymerisationsprozeß erneut zugeführt werden.

Es gibt Verfahren, in denen PA-6-Extraktwässer-Konzentrate mit hohen oder geringen Feststoffgehalten in kleineren oder größeren Anteilen dem Frischlactam zugesetzt werden, um sie mit zu Polyamid 6 umzusetzen. Nach den DE-AS 25 01 348 und DE-OS 27 32 328 werden auf mehr als 90% bzw. auf 60-70% Feststoffgehalt konzentrierte Polyamid-6-Extraktwässer mit mehr als der gleichen Menge Frischlactam, bezogen auf den Feststoffgehalt, mit Propion- bzw. Benzoesäure in einem im wesentlichen bei Normaldruck betriebenen Reaktor polymerisiert.

Nachteil dieses Verfahrens ist, daß bei Polymerisation von Polyamid-6-Extraktwässer-Konzentraten mit Monocarbonsäuren längere Polymerisationszeiten als bei Polymerisaten von Frischlactam mit Monocarbonsäuren erforderlich sind. Außerdem erreicht man nur solche Umsätze an ε-Caprolactam bzw. zyklischen Oligomeren, die ca. 2 bis 3 % unter denen von Frischlactam-Polymerisaten liegen, da die zyklischen Oligomeren am Reaktionsmechanismus im wesentlichen nicht teilnehmen. Der hohe Wassergehalt im Reaktionsgemisch führt in Verbindung mit der drucklosen Fahrweise des Polymerisationsreaktors zu einem ungünstigen Reaktionsablauf. Das Wasser kann reaktionstechnisch nicht wirken, da es verdampft.

Bekannt ist weiterhin, daß Schmelze-Vakuum-Entmonomerisierungsverfahren so betrieben werden, daß die gasförmig abgezogenen Entmonomerisierungsprodukte, d.h. ε-Caprolactam und zyklische Oligomere, in Frischlactam kondensiert und so der Polymerisation mit unterworfen werden (DE-OS 28 21 886 und DE-OS 29 48 865). Auch bei ähnlichen Verfahren werden die zyklischen Oligomere, insbesondere die zyklischen Dimere nicht zu reaktionsfähigen Verbindungen umgewandelt.

Auch ist die starke katalytische Wirkung der o-Phosphorsäure auf die ε-Caprolactam-Polymerisation [Geleji, F. u.a. Wirkungsmechanismus verschiedener Katalysatoren bei der Caprolactampolymerisation' in Faserforschung und Textiltechnik 13 (1962)6, 282-283] hinsichtlich der Polymerisation zyklischer Oligomeren (Schade, H. und Beckhaus, F.W.: Verfahren zum Polymerisieren von Oligomeren des ε-Caprolactams - DD-PS 24 307) bekannt. Als Nachteile einer solchen Polymerisationstechnologie treten unter anderem auf:
- zu schneller Anstieg der Viskosität und damit ungenügende Reproduzierbarkeit des erwünschten Polymerisationsgrades, weil die o-Phosphorsäure im wesentlichen als Katalysator und weniger als Kettenregler wirkt
- zu geringe Umsätze an ε-Caprolactam und zyklischen Oligomeren sowie
- Depolymerisationsvorgänge beim Verarbeiten eines solchen Polyamid-6-Granulates.

Um diesen vorgenannten Problemen aus dem Wege zu gehen, trennt man üblicherweise bei der Aufarbeitung der wäßrigen Extraktionswässer durch Destillation die Oligomeren ab. Die abgetrennten Oligomere werden unter Belastung der Umwelt deponiert oder durch Aufarbeitung mit Phosphorsäure energieintensiv zu Lactam depolymerisiert und das Lactam anschließend einer Reinigungsstufe zugeführt. Die Rückstände werden deponiert.

Polyamidhersteller haben bisher aus apparatetechnischen und wirtschaftlichen Gründen das Lactam-Oligomeren-Gemisch bis auf einen Restwassergehalt von ≤ 2 % durch Eindampfung aufkonzentriert. Bei diesem Wassergehalt wird es nicht möglich, das zyklische Dimere in den Polymerverband chemisch einzubinden.

Das Ziel der Erfindung besteht darin, bei der Herstellung von Polyamid 6 unter Verwendung von Rücklactam eine sichere und kontinuierliche Verarbeitung zu gewährleisten und vor allem über Rücklactam eingebrachte zyklische Dimere, auch zyklische Oligomere in den Herstellungsprozeß einzubinden und die Verarbeitung der Gesamtmenge unter Schaffung eines geschlossenen Stoffkreislaufes (ohne Abfall) zu hochwertigen Endprodukten zu erreichen.

Der Erfindung liegt die Aufgabe zugrunde, im Rücklactam enthaltene Oligomere im Lactam zu lösen und das zyklische Dimere während der Polymerisation an seiner Entstehung zu hindern und gleichzeitig vorhandene zyklische Dimere des Lactam-Oligomeren-Gemisches aus Rücklactam auf einfache Weise in eine reaktionsfähige Verbindung zu überführen und am Herstellungsprozeß teilnehmen zu lassen.

Diese Aufgabe wird durch die im Patentanspruch 1 angegebenen Merkmale gelöst. Vorteilhafte Ausgestaltungen und Weiterbildungen der Erfindung ergeben sich aus den Unteransprüchen.

Erfindungsgemäß werden bei Einsatz von Rücklactam unter Zusatz von ε-Caprolactam (Frischlactam) vor einer Weiterverarbeitung die im Rücklactam enthaltenen zyklischen Oligomeren im Lactam gelöst. In Abhängigkeit der Ausgangskonzentration der Oligomeren im Einsatzprodukt wird dabei eine Lösungstemperatur der Oligomeren im Lactam zwischen 120 und 180°C eingestellt.

Das Rücklactam wird dazu beispielsweise aus einem Rücklactambehälter mittels einer beheizten Pumpe gefördert, über einen Wärmetauscher auf vorzugsweise 150°C erwärmt und im Kreislauf gefahren, beziehungsweise einer Weiterbearbeitung zugeführt.

Bei der erfindungsgemäßen Herstellung von Polyamid 6 unter Verwendung von Rücklactamen erfolgt die Weiterverarbeitung des Rücklactams mit im Lactam gelösten Oligomeren, indem das Rücklactam oder Rücklactam unter Zusatz von Frischlactam in ein vorzugsweise geschlossenes System eingebracht und unter Druck durch Hydrolyse bei Wassergehalten von 3 bis 15 % und Temperaturen im Bereich von 220 - 280°C in der schmelzflüssigen Phase behandelt wird.

Der Wassergehalt wird bei der Hydrolyse der zyklischen Oligomere insbesondere zyklischer Dimere im Reaktionsgemisch in dieser Druckstufe (Dimerenbehandler), entsprechend dem Wassergehalt des Rücklactams bevorzugt bei 6 bis 15 % gehalten.

Unter der aufgeführten Einstellung von Wasserkonzentration und Reaktionstemperatur wird die dimere Ringverbindung aufgespalten. Dabei erhält man aus dem zyklischen Dimeren Aminocapronsäure und lineare Dimere, welche ein problemloses Einfügen in eine Polymerkette ermöglichen.

Überraschenderweise wurde gefunden, daß etwa 3 % Wasser im Lactam-Oligomeren-Gemisch enthalten sein müssen, um das zyklische Dimere zu spalten, wobei der Wasseranteil unter erhöhtem Druck in einem geschlossenen System günstig und voll wirksam zur Reaktion beiträgt. Mit einer solchen Lösung ist es möglich, Frischlactam und Rücklactam sowie Rücklactam problemlos auch allein einzusetzen.

Der Wassergehalt der Polymerenschmelze wird nachfolgend in einer weiteren Druckstufe mit Gasraum (Polymerisator) durch Abführen des überschüssigen Wassers in Abhängigkeit vom gewünschten konstanten Endpolymerisationsgrad, bei 0,3 und 1,9% eingestellt. Dazu wird der Druck im Gasraum dieses Polymerisators geregelt, vorzugsweise durch Regeln des Wassergehaltes und/oder der Temperatur.

Die Erfindung soll an Ausführungsbeispielen erläutert werden:

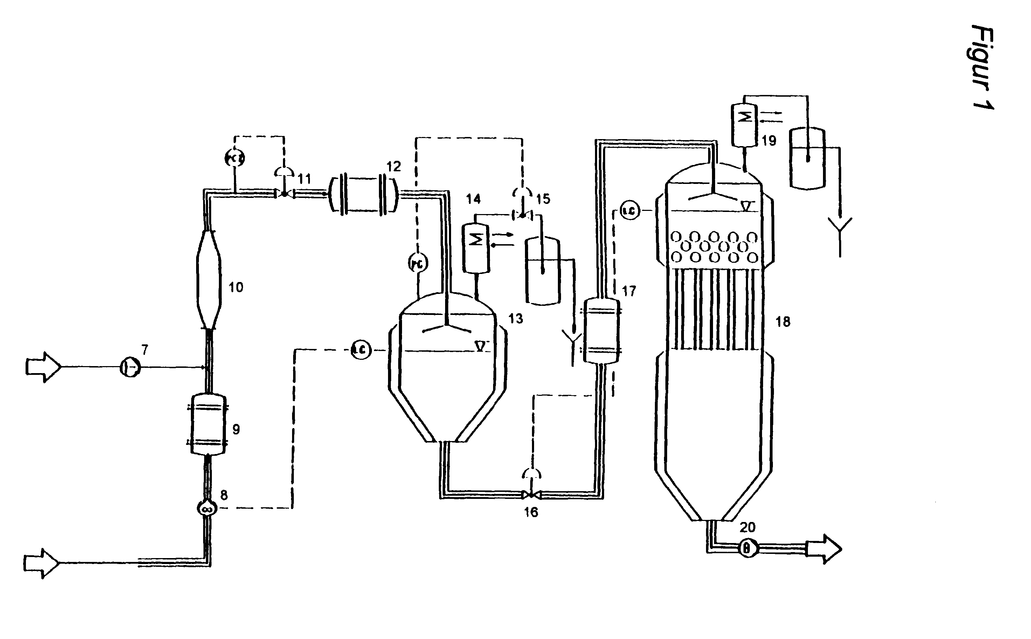

In Fig. 1 wird schematisch die Behandlung der zyklischen Dimeren und die Weiterführung der Polymerisationsreaktion dargestellt.

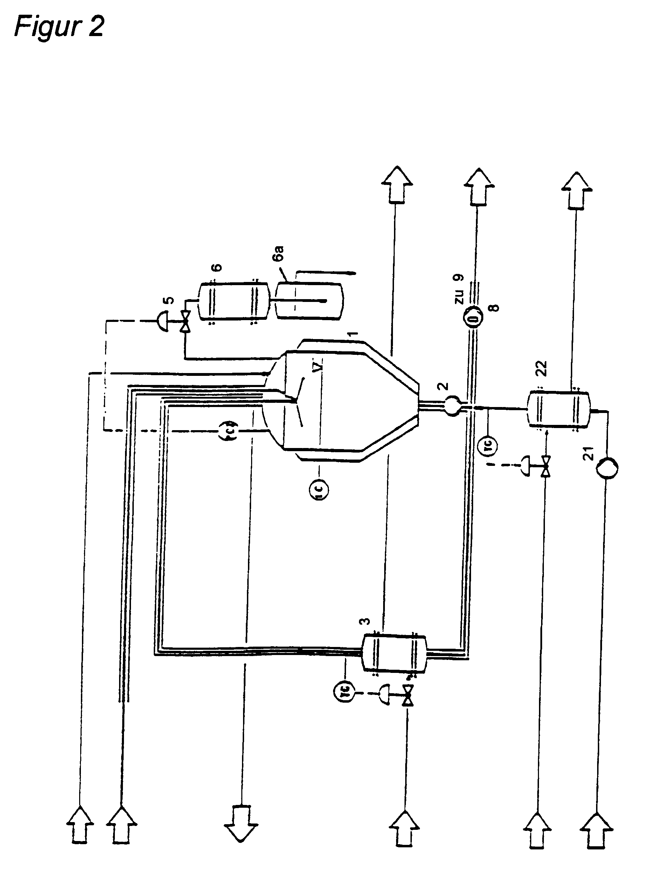

Nach dem in Fig. 2 dargestellten Ablauf werden in Rücklactam enthaltene, nicht gelöste Dimere und Oligomeren im Lactam gelöst.

### Ausführungsbeispiel 1

Für die Herstellung von Polyamid 6 aus Rücklactam werden Extraktionswässer auf einen mittleren Feststoffgehalt von 93 % (langperiodische Schwankungsbreite 91 bis 95 %) aufkonzentriert. Dieses sogenannte Rücklactam besteht aus monomerem Lactam, Dimeren, Oligomeren und Wasser. Beim Sammeln in einem Rücklactambehälter sind Dimere und Oligomere nicht ausreichend gelöst.

Mittels der beheizten Pumpe 2 wird das Rücklactam über einen Wärmetauscher 3 auf 150°C erwärmt und im Kreislauf gefördert. Bei der sich einstellenden Mischtemperatur im Rücklactambehälter sind alle Dimeren und Oligomeren gelöst. Zur Einstellung eines Wassergehaltes > 3 %, im Beispiel zwischen 5 und 9 %, wird das druckbegrenzte Regelventil 5 genutzt. Eventuell verdampfendes Wasser wird kondensiert und abgeführt. Wasser kann verdampfen, wenn der Wasseranteil im Rohlactam > 9 % beträgt. Mittels einer Dosierpumpe 8 wird das Rücklactam über einen weiteren Wärmetauscher 9 in den Dimerenbehandler 10 gedrückt.

In diesem Wärmetauscher 9 wird das Rücklactam auf mindestens 220°C aufgewärmt. Der Dimerenbehandler 10 ist ein Doppelmantel-Druckapparat, der mit Produkt - ohne Gasphase - gefüllt ist und über den Doppelmantel mittels Wärmeträger aktiv isoliert ist.

Unter diesen Bedingungen erhält man nach dem Dimerenbehandler eine Polyamidschmelze mit einer relativen Lösungsviskosität von 1,25 bis 1,35 (Lösungsviskosität bezogen auf Polymer-Schwefelsäurelösung mit 1 g Polyamid in 100 ml 96%-iger Säure im Vergleich zu reiner 96%-iger Schwefelsäure).

Um ein Polymerisat mit konstanten und höheren Viskositäten herstellen zu können, muß das im Überschuß vorhandene physikalisch gelöste Wasser der Schmelze in einem Polymerisator bis auf einen von der gewünschten Endviskosität abhängigen notwendigen Wassergehalt ausgetrieben werden.

Über ein Ventil 11 wird gesichert, daß der Druck oberhalb des Produktsiedepunktes im Dimerenbehandler 10 eingestellt bleibt. Über einen Verdampfer 12 gelangt das Produkt in den Polymerisator 13, der unter Druck bei einer Wasserkonzentration von 1,7 % betrieben wird. Das verdampfte Wasser verläßt über eine Rückflußkolonne das System, von wo das im aufsteigenden Dampf enthaltene Lactam wieder in den Polymerisator 13 zurückläuft.

Nach dem Polymerisator 13 gelangt das Polyamid über Ventil und Verdampfer in einen Polyamidnachkondensator 18. Im unteren Teil dieses Nachkondensators 18 wird die PA-Schmelze auf 240°C abgekühlt.

Über eine Dosierpumpe 20 verläßt das Polyamid das Verfahren mit derLösungsviskosität von 2,5 und einem in Wasser extrahierbaren Anteil von 9,9 %.

### Ausführungsbeispiel 2

Es wird in einer Polymerisationsanlage für die Herstellung von Polyamid 6 ein Lactam-Oligomeren-Gemisch eingesetzt, das aus Entmonomerisierungsstufen stammt und demzufolge nahezu kein Wasser enthält.

Um ein Ausfallen der Oligomeren zu vermeiden, wird dieses Gemisch mittels Wärmetauscher 3 auf 150°C erwärmt, wodurch die Dimeren und Oligomeren in Lösung gehen. Diese Lösung läßt sich unproblematisch über größere Entfernungen transportieren, ohne daß es zu einem Verschluß der Rohrleitungen durch ausgefallene Oligomere kommt.

Die Lactam-Dimeren-Oligomerenlösung wird wie im Ausführungsbeispiel 1 in einem weiteren Wärmetauscher 9 erwärmt, jedoch hier auf minimal 240°C, und anschließend in die erfindungsgemäße Druckstufe, den Dimerenbehandler 10, eingebracht und behandelt. Zwischen Wärmetauscher und Dimerenbehandler wird Wasser über das Ventil 7 eingespeist und die Schmelze auf einen Wassergehalt von 6 % physikalisch gelöstes Wasser eingestellt. Die zyklischen Oligomere, insbesondere Dimere werden in der Druckstufe durch Hydrolyse reaktionsfähig gespalten.

Der weitere Polysmerisationsablauf erfolgt analog wie im Ausführungsbeispiel 1 beschrieben. Man erhält ein Polymerisat mit einer Lösungsviskosität von 2,52 und einem Gesamtextrakt von 9,9 %.

### Ausführungsbeispiel 3

In einer Polymerisationsanlage wird Polyamid 6 aus Rücklactam und Frischlactam hergestellt.

Dazu setzt man dem Lactam-Oligomeren-Gemisch, gewonnen aus Entmonomerisierungsstufen, die etwa gleiche Menge an Frischlactam zu. Bei diesem Mischungsverhältnis lösen sich die Oligomeren bereits bei ca. 120°C im Lactam. Die Aufwärmung und die weitere Behandlung der polymeren Schmelze wird analog wie im Ausführungsbeispiel 1 beschrieben vorgenommen. Die Wasserzuführung bis auf einen Wassergehalt von 6 % erfolgt wie im Ausführungsbeispiel 2 dargestellt. Man erhält ein Polymerisat mit einer Lösungsviskosität von 2,61 und einem Gesamtextrakt von 9,7 %.

## Patentansprüche

1. Verfahren zur kontinuierlichen Herstellung von Polyamid 6 unter Verwendung von Rücklactam aus Extraktions- und Schmelzeentmonomerisierungsstufen,
dadurch gekennzeichnet, daß die im Rücklactam unter Zusatz von ε-Caprolactam (Frischlactam) enthaltenen zyklischen Oligomere, in Abhängigkeit von der Konzentration der Oligomeren im Einsatzprodukt, bei einer Lösungstemperatur zwischen 120 und 180°C im Lactam gelöst werden und die Lösung anschließend einer Behandlung zugeführt wird, wobei die Lösung in ein vorzugsweise geschlossenes System eingebracht und in einer ersten Druckstufe (Dimerenbehandler) durch Hydrolyse bei Wassergehalten von 3 bis 15 % und Temperaturen im Bereich von 220 bis 280°C in der schmelzflüssigen Phase behandelt und die polymere Schmelze nachfolgend unter Einstellung eines konstant niedrigeren Wassergehaltes in einer weiteren Druckstufe mit Gasraum (Polymerisator) dem weiteren Polymerisationsprozeß zugeführt wird.

2. Verfahren nach Anspruch 1,
dadurch gekennzeichnet, daß Rücklactam mittels einer beheizten Pumpe aus einem Rücklactambehälter gefördert und über einen Wärmetauscher auf vorzugsweise 150°C erwärmt und im Kreislauf gefahren wird.

3. Verfahren nach Anspruch 1 und 2,
dadurch gekennzeichnet, daß der Wassergehalt in der polymeren Schmelze bei der Hydrolyse der zyklischen Oligomere und Dimere in der Druckstufe (Dimerenbehandler) entsprechend dem vorhandenen Wassergehalt des Rücklactams bei 6 - 15 % gehalten wird.

4. Verfahren nach Anspruch 1 bis 3,
dadurch gekennzeichnet, daß der Wassergehalt in der polymeren Schmelze in der weiteren Druckstufe mit Gasraum (Polymerisator) durch Abführen des überschüssigen Wassers in Abhängigkeit vom gewünschten Endpolymerisationsgrad bei 0,3 - 1,9 % eingestellt wird.

## Claims

1. A process for the continuous production of polyamide 6 using recycled lactam from extraction and melt monomer removal stages, characterized in that the cyclic oligomers contained in the recycled lactam are dissolved in the lactam by adding ε-caprolactam (fresh lactam) at a dissolution temperature between 120°C and 180°C, depending on the concentration of oligomers in the product, and the solution then undergoes a treatment whereby the solution is fed into a system which is preferably closed and treated in a first pressure stage (dimer processor) by hydrolysis in the molten state with a water content of 3 % to 15 % and at a temperature in the range 220°C to 280°C and the polymer melt is then sent to a further pressure stage including a gas space (polymeriser) where the polymerisation process is continued using a constant low water content.

2. A process according to claim 1, characterized in that recycled lactam is sent from the recycled lactam container by means of a heated pump, heated by means of a heat exchanger, preferably to 150°C and fed back in closed circuit.

3. A process according to claim 1 or claim 2, characterized in that on hydrolysis of the cyclic oligomers and dimers in the pressure stage (dimer processor), the water content in the polymer melt is kept to 6-15 %, depending on the existing water content of the recycled lactam.

4. A process according to claims 1 to 3, characterized in that in the further pressure stage including a gas space (polymeriser), the water content in the polymer melt is adjusted to 0.3 - 1.9 %, depending on the desired final degree of polymerisation, by removal of the excess water.

## Revendications

1. Procédé de production continue de polyamide 6 à l'aide de lactame recyclé provenant d'étapes de démonomérisation par extraction et à l'état fondu, caractérisé en ce que les oligomères cycliques contenus dans le lactame recyclé tandis que du ε-caprolactame (lactame frais) est ajouté sont dissous dans le lactame à une température de solution entre 120 et 180°C, en fonction de la concentration des oligomères dans le produit utilisé, et la solution est ensuite envoyée à un traitement où la solution est introduite dans un système de préférence fermé et traitée dans une première étape sous pression (dispositif de traitement de dimères) par hydrolyse à des teneurs en eau de 3 à 15% et des températures dans le domaine de 220 à 280°C dans la masse liquide fondue et la masse fondue polymère est ensuite envoyée à la suite du procédé de polymérisation avec réglage d'une plus faible teneur en eau constante dans une autre étape sous pression avec compartiment de gaz (polymérisateur).

2. Procédé selon la revendication 1 caractérisé en ce que le lactame recyclé est transporté au moyen d'une pompe chauffée depuis un récipient de lactame recyclé et est chauffé de préférence à 150°C par le biais d'un échangeur de chaleur et mis en circulation.

3. Procédé selon les revendications 1 et 2 caractérisé en ce que la teneur en eau de la masse fondue polymère lors de l'hydrolyse des oligomères et dimères cycliques dans l'étape sous pression (dispositif de traitement des dimères) est maintenue à 6 - 15% selon la teneur en eau existante du lactame recyclé.

4. Procédé selon les revendications 1 à 3 caractérisé en ce que, dans l'autre étape sous pression avec compartiment de gaz (polymérisateur), la teneur en eau de la masse fondue polymère est ajustée à 0,3 - 1,9% en fonction du degré de polymérisation final voulu par évacuation de l'eau en excès.
